# EUROPEAN PATENT APPLICATION

(11) **EP 4 481 912 A1**
(43) Date of publication of application: **25.12.2024**
(21) Application number: 24183830.9
(22) Date of filing: 21.06.2024
(51) Int. Cl.: H01M 50/172

(54) **TOP COVER ASSEMBLY AND BATTERY**

(30) Priority: 21.06.2023 CN 202321598398 U; 21.06.2023 CN 202310743118; 21.06.2023 CN 202321598171 U; 01.03.2024 WO PCT/CN2024/079584
(71) Applicant: Eve Power Co., Ltd., Jingmen Hubei 448000 (CN)
(72) Inventor: ZHOU, Yu, Jingmen, Hubei, 448000 (CN); CHEN, Xianyang, Jingmen, Hubei, 448000 (CN); SUN, Fei, Jingmen, Hubei, 448000 (CN); QIU, Zhangheng, Jingmen, Hubei, 448000 (CN)
(74) Representative: Murgitroyd & Company

(57) **Abstract**

The application discloses a top cover assembly and a battery. The top cover assembly includes a cover plate, a pressing plate and a pole. The cover plate is provided with a first through-hole. The pressing plate includes a first end surface and a second end surface oppositely arranged, and a variable-section through-hole. The pole sequentially passes through the first through-hole and the variable-section through-hole, and the first end surface faces the cover plate. An opening area of an end of the variable-section through-hole toward the first end surface is a1, an opening area of another end of the variable-section through-hole toward the second end surface is a2, and a cross-sectional area of the pole is A, where a1, a2 and A satisfy with: a2≤A<a1.

## Description

### TECHNICAL FIELD

The present application relates to the technical field of batteries, and more particularly, to a top cover assembly and a battery.

### BACKGROUND

In related arts, a top cover assembly generally includes a cover plate, an insulating assembly, a pressing plate, and a pole. After the pole passes through the pressing plate, the pressing plate is pressed to clamp and tightly connect the cover plate and the insulating assembly between the pole and the pressing plate, and tightly connection is made thereamong, and then welding is performed to realize axial fixing of the top cover assembly. However, if a clearance fit is defined between the pole and the pressing plate, it is difficult to control a gap between the pole and the pressing plate, resulting in a large difference between different products. If an interference fit is defined between the pole and the pressing plate, a tight fit therebetween causes a compression to the pressing plate, resulting in deformation of the pressing plate and increase of the assembly difficulty.

### SUMMARY

The present application provides a top cover assembly including a cover plate, a pressing plate and a pole; where a first through-hole is defined in the cover plate, the pressing plate has a first end surface and a second end surface oppositely arranged, and the pressing plate is provided with a variable-section through-hole. The pole sequentially passes through the first through-hole and the variable-section through-hole, and the first end surface faces the cover plate. An opening area of an end of the variable -section through-hole toward the first end surface is a1, an opening area of another end of the variable-section through-hole toward the second end surface is a2, and a cross-sectional area of the pole is A, where a1, a2 and A satisfy with: a2≤A<a1.

The present application also provides a battery including the top cover assembly described above.

Advantageous effects of the present application are as follows: according to the top cover assembly provided in the present application, the opening area of an end of the variable-section through-hole toward the first end surface is a1, the opening area of another end of the variable-section through-hole toward the second end surface is a2, and the cross-sectional area of the pole is A, where a1, a2 and A satisfy with: a2≤A<a1. It is possible to ensure that, during fitting the pole and the pressing plate, the second end surface is fitted without clearance or slight tightly fitted with the pole to avoid a gap between the pole and the pressing plate. By providing clearance fit between the first end surface and the pole, at least part of the pressing plate and the pole is in clearance fit to prevent the pressing ring effectively from being pressed, to avoid the deformation of the pressing ring, and to reduce assembly difficulty. By providing the pressing plate with a variable-section through-hole and a matching relationship between the variable-section through-hole and the pole, the production cost of the top cover assembly is reduced.

According to the battery provided in the present application, with the above-described top cover assembly, it is avoided to cause a gap between the pole and the pressing plate, and a pressing ring can be effectively prevented from being pressed, thereby avoiding deformation of the pressing ring, and reducing the assembly difficulty. Therefore, the quality of the battery provided in the present application can be effectively improved.

### BRIEF DESCRIPTION OF THE DRAWINGS

FIG. 1 is an exploded view of a top cover assembly according to some embodiments of the present application;
FIG. 2 is a schematic structural diagram of a pressing plate according to some embodiments of the present application;
FIG. 3 is a sectional view taken along line A-A in FIG. 2;
FIG. 4 is a schematic structural diagram of a pole according to some embodiments of the present application;
FIG. 5 is a front view of a pole according to some embodiments of the present application;
FIG. 6A is a perspective view of a first insulating plate according to some embodiments of the present application;
FIG. 6B is another perspective view of a first insulating plate according to some embodiments of the present application;
FIG. 7 is a partial cross-sectional view of a top cover assembly according to some embodiments of the present application; and
FIG. 8 is an enlarged view at portion P of FIG. 7.

### Reference Numerals:

1. cover plate; 10. first through-hole; 11. groove; 12. liquid injection hole; 2. pressing plate; 21. first end surface; 22. second end surface; 23. variable-section through-hole; 24. limiting groove; 3. first insulating plate; 31. second through-hole; 32. ventilation groove; 321. annular portion; 322, radial portion; 323, recess groove; 33. mounting groove; 34. limiting table; 35. separating projection; 36. fence; 4. pole; 41. flange; 5. second insulating plate; 51. limiting projection; 6. sealing ring; 7. protective film; 8. explosion-proof valve; N. accommodating cavity; M1. gas passage; M2, discharge passage; and M. exhaust passage.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as an integration in a whole; or as a mechanical connection or an electrical connection; or as a direct connection or an indirect connection by means of an intermediate medium; or as an internal communication of the two elements or an interaction of the two elements. The specific meaning of the above terms in the present application may be understood by one of ordinary skill in the art as the case may be.

In the present application, unless otherwise expressly defined and defined, the phase that the first feature is "on" or "under" the second feature include a direct contact of the first feature and the second feature, as well as an indirect contact of the first feature and second feature by additional features therebetween. Moreover, the phase that the first feature is "above", "up" or "over" the second feature includes that the first feature is directly above and obliquely above the second feature, or merely indicates that the first feature is higher than the second feature. The phase that the first feature is "below", "down" or "underneath" the second feature includes the first feature directly below and obliquely below the second feature, or merely indicates that the first feature is lower than the second feature.

In the description of the embodiments, the terms "up", "down", "left", and "right" are made references to orientation and the position in the drawings for brief description, and do not indicate or imply to configure or operate the device or element in any specific orientation, which should not be understood as a limit to the present application. Furthermore, the terms "first" and "second" are used solely for the purpose of distinguishing between description and not in a particular sense.

### Embodiment 1

Embodiments of the present application provide a battery that includes a top cover assembly, and the top cover assembly can be used as a top cover for the battery.

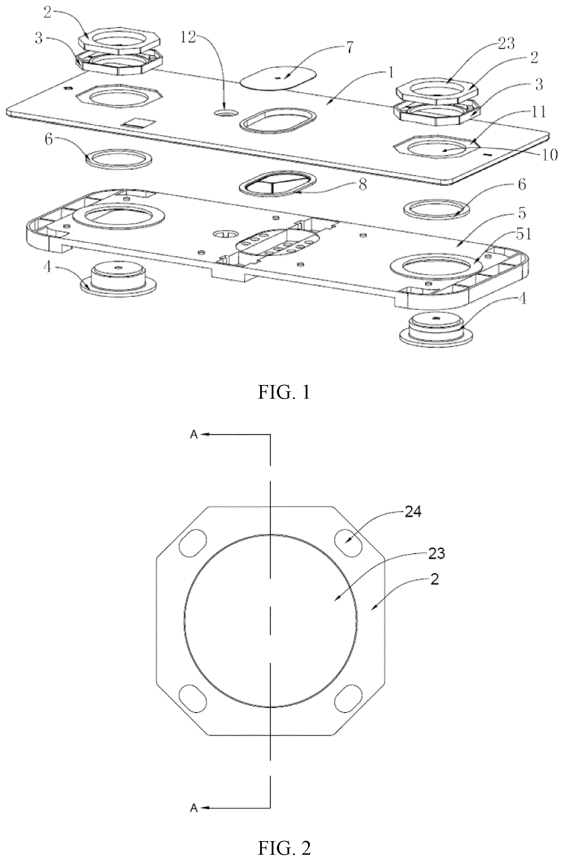

As shown in FIG. 1 to FIG. 5, the top cover assembly includes a cover plate 1, a pressing plate 2 and a pole 4. The cover plate 1 is provided with a first through-hole 10. The pressing plate 2 includes a first end surface 21 and a second end surface 22 oppositely disposed, and is provided with a variable-section through-hole 23. The pole 4 sequentially passes through the first through-hole 10 on the cover plate 1and the variable-section through-hole 23, and the first end surface 21 faces the cover plate 1. As such, the pole 4, the pressing plate 2 and the cover plate 1 are connected. Illustratively, the pole 4 and the pressing plate 2 are connected by welding.

The opening area of an end of the variable-section through-hole 23 toward the first end surface 21 is a1, the opening area of another end of the variable-section through-hole 23 toward the second end surface 22 is a2, and the cross-sectional area of the pole 4 is A, where a1, a2 and A satisfy with: a2≤A<a1. By the above-mentioned dimensional relationship, it is possible to ensure that when the pole 4 and the pressing plate 2 are fitted, the end of the variable-section through-hole 23 toward the second end surface 22 is fitted without clearance or tightly fitted with the pole 4, thereby avoiding a gap between the pole 4 and the pressing plate 2. When the pole 4 and the pressing plate 2 are fixed by laser welding, the difference in the weld gap due to the dimensional fluctuation is reduced, so that the yield of laser welding between the pole 4 and the pressing plate 2 can be greatly improved.

Illustratively, the top cover assembly further includes a seal ring 6. As a result of the above-mentioned cooperation between the pole 4 and the pressing plate 2, a gap between the pole 4 and the second end surface 22 of the pressing plate 2 is avoided, so that no laser light leakage can be ensured during laser welding, and the risk of failure of the seal due to burning of the sealing ring 6 by the laser light leakage is avoided.

In addition, by the clearance fit between the end of the variable-section through-hole 23 toward the first end surface 21 and the pole 4, the pressing plate 2 and the pole 4 are at least partially in the clearance fit to form the accommodating cavity N. The expanded gas generated in the heated area of the pole 4 can be accommodated in the accommodating cavity N when the pole 4 is welded, so that the problem in the related arts that the expanded gas presses the pressure ring to cause deformation of the pressure ring, a cavity formed in the interior and the welding seam, and failure in welding can be avoided. By providing the pressing plate 2 with the variable-section through-hole 23 and the cooperation between the variable-section through-hole 23 and the pole 4, the welding yield is improved, the welding difficulty is reduced, and the production cost of the top cover assembly is reduced.

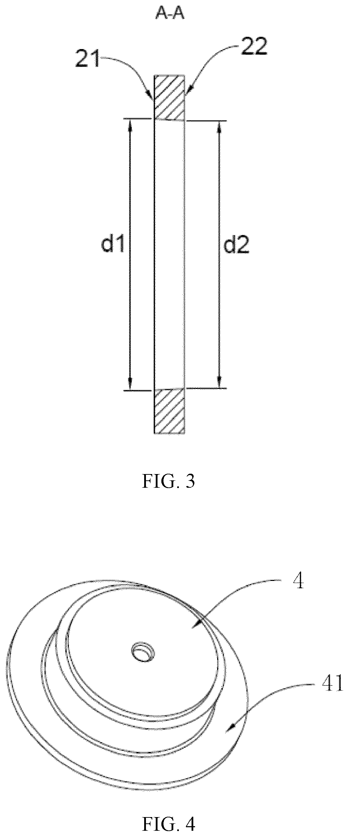

As shown in FIG. 3, the opening area of the variable- section through-hole 23 is successively reduced along a direction from the first end surface 21 to the second end surface 22, so that a guiding effect can be provided. It is ensured that the pressing plate 2 is more easily sleeved on the pole 4 when the pressing plate 2 and the pole 4 are assembled, thereby reducing assembly difficulty. In some embodiments, the variable-section through-hole 23 has a trumpeted shape. In other embodiments, the variable-section through-hole 23 has a tapered-mouth shape or other shape, which is not limited by the present application.

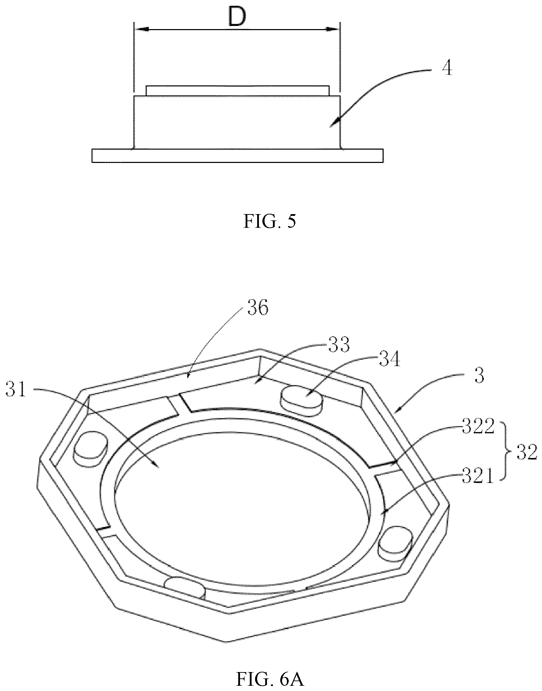

As shown in FIG. 3 and FIG. 5, the cross-sectional shapes of the variable-section through-hole 23 and the pole 4 are the same, and the variable-section through-hole 23 and the pole 4 have regular cross-sectional shapes or irregular shapes, such as a circle, an ellipse, and a rectangle. The cross-sectional shapes of the variable-section through-hole 23 and the pole 4 are not limited, as long as the first end surface 21 and the pole 4 are in clearance fit, and the second end surface 22 and the pole 4 are fitted without clearance or tightly fitted.

In some embodiments, the cross-sectional shapes of the variable-section through-hole 23 and the pole 4 are circular. The diameter of the pole 4 is D, the aperture at the end of the variable-section through-hole 23 toward the first end surface 21 is d1, and the aperture at the end of the variable-section through-hole 23 toward the second end surface 22 is d2, where D, d1, and d2 satisfy with: d2≤D<d1. As such, it is possible to prepare the variable-section through-hole 23 easily, while easily ensuring the fitting accuracy between the variable-section through-hole 23 and the pole 4.

In some embodiments, d1 and d2 satisfy with: d1-d2=B, where B ranges from 0.1mm to 0.3mm. The value of B may in particular be 0.1 mm, 0.2 mm or 0.3 mm, or the like. With this arrangement, the gap between the variable-section through-hole 23 and the pole 4 is large, so that it is easy to mount, and to define an accommodating cavity N with a large accommodating space. D and d2 satisfy with: D-d2=C, where C ranges from 0 to 0.05mm. The value of C may in particular be 0, 0.01mm, 0.02mm, 0.03mm, 0.04mm, 0.05 mm, or the like. As such, the end of the variable-section through-hole 23 toward the second end surface 22 and the pole 4 are fitted without clearance or tightly fitted, thereby providing more convenience for the assembly.

In some embodiments, as shown in FIG. 1, the top cover assembly further includes an insulating member for effecting an insulating connection between the pole 4 and the cover plate 1, and between the cover plate 1 and the pressing plate 2. The insulating member may include a first insulating plate 3 and a second insulating plate 5, the first insulating plate 3 and the second insulating plate 5 are provided on opposite sides of the cover plate 1, the pole 4 passes through the first insulating plate 3 and the second insulating plate 5, and the first insulating plate 3 and the second insulating plate 5 may be of an integral structure or a separate structure.

The first insulating plate 3 is sandwiched between the pressing plate 2 and the cover plate 1, and the first end surface 21 faces the first insulating plate 3. The first insulating plate 3 is provided with a second through-hole 31, and the pole 4 sequentially passes through the first through-hole 10, the second through-hole 31, and the variable-section through-hole 23. A gas passage M1 is defined between the first insulating plate 3 and the pressing plate 2, and the variable-section through-hole 23 communicates with the outside through the gas passage M1.

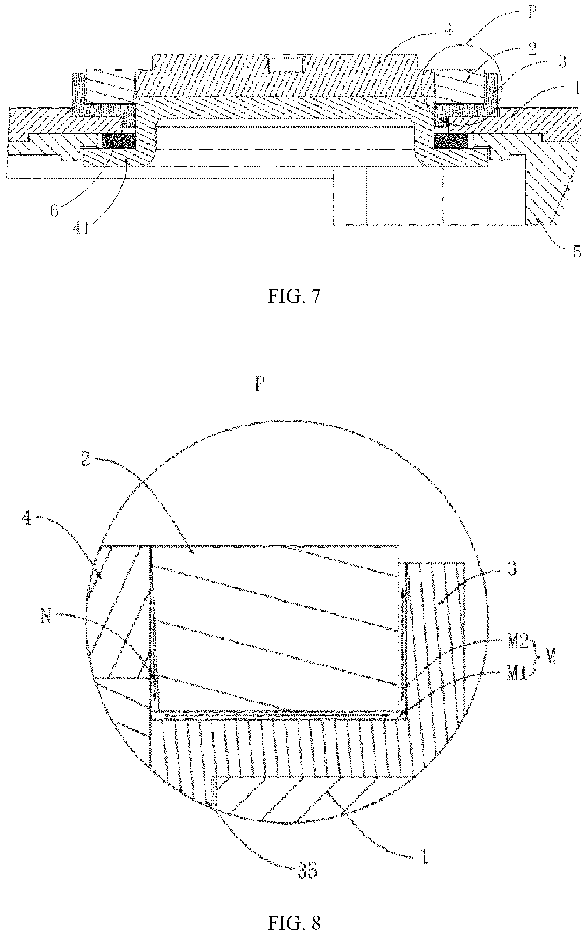

During assembly, the pole 4 is sequentially passed through the first through-hole 10, the second through-hole 31, and the variable-section through-hole 23, and then the pole 4 is welded to the pressing plate 2, thereby achieving the fixing between the pressing plate 2 and the pole 4, and achieving the axial connection of the top cover assembly. When the pole 4 is welded, the expanded gas generated in the heated area of the pole 4 can be discharged in time through the gas passage M1, to avoid the welding seam from generating cavity, thereby improving the welding yield and the battery quality. The expanded gas is discharged along the direction pointed to by an arrow in FIG. 8.

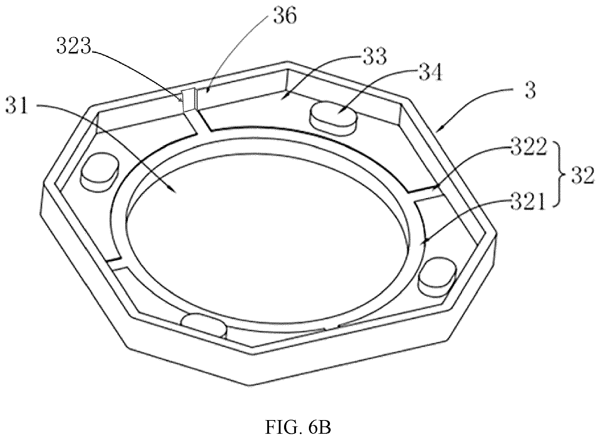

In some embodiments, as shown in FIG. 1 and FIG. 6, the first insulating plate 3 is provided with a ventilation groove 32 which communicates with the second through-hole 31, the variable-section through-hole 23 and the outside. The ventilation groove 32 and the pressing plate 2 together define the gas passage M1. The first insulating plate 3 and the pressing plate 2 may be of any thickness, shape, or the like. For example, the first insulating plate 3 and the pressing plate 2 may be a flat plate, a wedge plate, or the like. The ventilation groove 32 may be any shape, depth, width, or the like, and may be, for example, a linear groove, an arc-shaped groove, a curved groove, or the like. The present application is not limited to the above, as long as it is ensured that the expansion gas can be discharged through the gas passage M1.

Illustratively, both the first insulating plate 3 and the pressing plate 2 are in the shape of a flat plate, and the ventilation groove 32 is defined on the side surface of the first insulating plate 3 toward the pressing plate 2, which is simple in structure and convenient to assemble.

In some embodiments, the side surface (this is, the first end surface 21 of the pressing plate 2) of the pressing plate 2 toward the first insulating plate 3 is provided with an exhaust groove, and the exhaust groove communicates with the second through-hole 31, the variable-section through-hole 23, and the outside. The exhaust groove and the first insulating plate 3 together define the gas passage M1.

Illustratively, in the case where both the first insulating plate 3 and the pressing plate 2 are flat, the exhaust groove is provided at the first end surface 21 of the pressing plate 2.

In another embodiment, in a case that the first insulating plate 3 is provided with the mounting groove 33 and the pressing plate 2 is flat, the pressing plate 2 is provided in the mounting groove 33, a gap is provided between the outer peripheral surface of the pressing plate 2 and the side wall of the first insulating plate 3 located in the mounting groove 33, the ventilation groove is provided at the end surface (that is, the first end surface 21 of the pressing plate 2) of the pressing plate 2 toward the bottom of the mounting groove 33, and the ventilation groove communicates with the outside through the gap.

The shapes of the ventilation groove 32 and the exhaust groove are not limited in the present application. For ease of description, some of the following embodiments of the present application are illustrated by way of example in the structure of the ventilation groove 32.

In some embodiments, the pressing plate 2 and the pole 4 are at least partially in clearance fit to define an accommodating cavity N, an end of the gas passage M1 is in communication with the accommodating cavity N, and the other end of the gas passage M1 is in communication with the outside. By providing the gas passage M1, it is ensured that the expanded gas generated during welding can be discharged to the outside through the accommodating cavity N and the gas passage M1 in sequence, so that no cavity is formed in the interior, thereby improving the welding yield. This further avoids the problem in the related arts that the expansion gas generated in the heated area of the pole 4 during welding cannot be discharged from the welding seam due to the tight fit between the pole 4 and the pressing ring, which can squeeze the pressing ring, resulting in deformation of the pressing ring and failure of the welding.

In some embodiments, as shown in FIG. 6 to FIG. 8, the first insulating plate 3 is provided with a mounting groove 33, the bottom wall of the mounting groove 33 carries the first end surface 21, the second through-hole 31 is defined in the bottom wall of the mounting groove 33, and the ventilation groove 32 communicating with the second through-hole 31 is defined in the bottom wall of the mounting groove 33. The first end surface 21 and the ventilation groove 32 together define the gas passage M1, and the gap between the side wall of the mounting groove 33 and the side surface of the pressing plate 2 together define a discharge passage M2. The gas passage M1 and the discharge passage M2 communicate to define an exhaust passage M. The gas passage M1 communicates with the accommodating cavity N, and the discharge passage M2 communicates with the outside, so that expanded gas can be discharged to the outside through the gas passage M1 and the discharge passage M2 in sequence. The pressing plate 2 is mounted in the mounting groove 33, which advantageously prevents the peripheral side of the pressing plate 2 from contacting the outside, thereby improving the structural reliability. In other embodiments, the side wall of the mounting groove 33 may be provided with a through-hole, so that the other end of the ventilation groove 32 communicates with the through-hole to communicate with the outside.

Illustratively, the first insulating plate 3 is provided with a fence 36 through which the above-mentioned mounting groove 33 can be defined.

In some embodiments, the mounting groove 33 is a polygonal groove, the pressing plate 2 is a polygonal plate, and the pressing plate 2 and the mounting groove 33 conform in shape. When the pressing plate 2 is mounted in the mounting groove 33, circumferential limiting can be achieved. The mounting groove 33 and the pressing plate 2 may be in shape of triangle, quadrangle, pentagon, hexagon, heptagon, and octagon, and the like, and the symmetrical shape is preferable.

When a gap (i.e., the discharge passage M2) is provided between the outer peripheral surface of the pressing plate 2 and the side wall of the mounting groove 33, it is included that, alternatively, the cross-sectional area of the pressing plate 2 (i.e., the outer peripheral area of the first end surface 21 or the second end surface 22) is less than the opening area of the mounting groove 33, so that an annular gap is defined between the pressing plate 2 and the side wall (i.e., the fence 36) of the mounting groove 33 to ensure the gas passage M1 to communicate with the annular gap (i.e., the discharge passage M2) at any position; alternatively, the outer peripheral surface of the pressing plate 2 and/or the side wall (for example, the inner side surface of the fence 36) of the mounting groove 33 are provided with a recess groove 323, and the above-mentioned discharge passage M2 is defined between the outer peripheral surface of the pressing plate 2 and the side wall of the mounting groove 33 by the recess groove 323. The recess groove 323 and the gas passage M1 are in communication, and are not limited in shape and position.

In some embodiments, as shown in FIG. 6, the ventilation groove 32 includes an annular portion 321 communicating with the second through-hole 31 and a radial portion 322, an end of the radial portion 322 communicates with the annular portion 321 and the other end of the radial portion 322 extends to the side wall of the mounting groove 33. An annular passage is defined between the annular portion 321 and the first end surface 21, and a linear passage is defined between the radial portion 322 and the first end surface 21. The annular passage and the linear passage define the gas passage M1, the annular passage communicates with the accommodating cavity N, and the linear passage communicates with the annular passage and the discharge passage M2. When the laser welding is performed, gas is expanded at the heated area, and the expanded gas flows through the annular passage immediately to the linear passage, and then flows through the linear passage to the discharge passage M2.

Illustratively, a plurality of the radial portions 322 is provided, and the plurality of radial portions 322 is uniformly arranged along the outer periphery of the annular portion 321. After entering the annular portion 321, the expanded gas can be discharged outwardly from the radial portion 322, thereby further improving the discharge efficiency of the expanded gas.

Illustratively, the radial portion 322 may also be, for example, an S-shaped curved groove or an arc-shaped groove or the like. The number of radial portions 322 may be one, two, three, four, or five, and the shape and depth of each radial portion 322 may be the same or different. The annular portion 321 may be an annular ring having a uniform width or an annular ring having a non-uniform width.

In other embodiments, an end of the ventilation groove 32 communicates with the second through-hole 31, and the other end of the ventilation groove 32 extends to the side wall of the mounting groove 33. The ventilation groove 32 is not limited in shape. Illustratively, the ventilation groove 32 is provided in a radial direction, and the ventilation groove 32 is provided with one or more, so long as it is ensured that the ventilation groove 32 and the first end surface 21 define the gas passage M1 to discharge the expanded gas to the outside.

Further, the depth of the ventilation groove 32 ranges from 0.1mm to 0.2mm, and the depth may be 0.1 mm, 0.15mm, or 0.2 mm, so that it is prevented the excessive depth prevented from affecting the structural strength while too small depth from affecting the discharge of the gas. Illustratively, the depth of the radial portion 322 and the annular portion 321 have a same depth ranging from 0.1mm to 0.2mm, specifically, the depth may be 0.1 mm, 0.15mm, and 0.2 mm.

In some embodiments, as shown in FIG. 2 and FIG. 6, one of the pressing plate 2 and the first insulating plate 3 is provided with a limiting groove 24, and the other of the pressing plate 2 and the first insulating plate 3 is provided with a limiting table 34. The limiting table 34 is mounted to the limiting groove 24 so as to limit the pressing plate 2 and the first insulating plate 3, so that the circumferential limiting can also be realized. Thus, the mounting accuracy of the pressing plate 2 and the first insulating plate 3 can be improved. A plurality of limiting tables 34 and a plurality of limiting grooves 24 are provided, and the plurality of limiting tables 34 has a same number with the plurality of limiting grooves 24. The cross-sectional shapes of the limiting groove 24 and the limiting table 34 may be circular, elliptical, oblong, polygonal, irregular, or the like.

It should be noted that in FIG. 2 and FIG. 6, the limiting groove 24 is provided to the pressing plate 2, and the limiting table 34 is provided to the first insulating plate 3 as an example. In some examples, a limiting groove may also be provided on the first insulating plate 3, and a limiting table may be provided on the pressing plate 2, which is not limited by the present application.

In the present embodiment, as shown in FIG. 2 and FIG.6, four radial portions 322, four limiting grooves 24, and four limiting tables 34 are provided, and the four limiting tables 34 and the four radial portions 322 are alternately arranged.

As shown in FIG. 1, FIG. 4, and FIG. 7, top cover assembly further includes a second insulating plate 5, and a flange 41 is provided at the periphery of the pole 4. The second insulating plate 5 is sandwiched between the flange 41 and the cover plate 1. The first insulating plate 3, the cover plate 1, and the second insulating plate 5 are clamped between the pressing plate 2 and the flange 41 by the pressing plate 2.

It should be noted that, in FIG. 7, the flange 41 and the pole 4 are actually integrated as shown in FIG. 4.

As shown in FIG. 1, two poles 4 are provided, one of the two poles 4 is provided as a positive pole and the other of the two poles 4 is provided as a negative pole, and the two poles have the same shape and size. The positive pole is made of aluminum material, and is formed by pier pressing. The negative pole is made of a copper-aluminum composite plate, and is formed by pier pressing and mechanical processing. The mechanical processing and the pier pressing are known in the related arts, of which the details are not described. As such, the positive pole and the negative pole have high universality and assembly convenience, and the production process of the top cover assembly is simplified. Two pressing plate 2 are provided, and the two poles 4 connected to the two pressing plates 2 respectively. Two first insulating plates 3 are provided, the first insulating plate 3 and the second insulating plates 5 are all plastic plates, and the shapes and sizes of the two first insulating plates 3 are the same. The cover plate 1 is provided with two grooves 11, the two first insulating plates 3 are respectively limited in the two grooves 11. The grooves 11 may be polygonal grooves, and the first insulating plates 3 may be polygonal plates, so that rotation of the first insulating plates 3 in the polygonal grooves is prevented, thereby realizing limiting.

As shown in FIG. 8, the through-hole of the cover plate 1 is greater than the diameter of the pole 4, the first insulating plate 3 is provided with a separating projection 35 on the side away from the mounting groove 33, the separating projection 35 extends into the first through-hole 10 of the cover plate 1, so that the pole 4 is separated from the cover plate 1. The sealing ring 6 is provided in the through-hole of the second insulating plate 5, so that the pole 4 is separated from the second insulating plate 5. The cover plate 1 is provided on the side of the sealing ring 6 and the second insulating plate 5, so that contact between the pole 4 and the cover plate 1 is prevented.

As shown in FIG. 1, the second insulating plate 5 is provided with a limiting projection 51, which is provided in the second mounting groove to limit the position between the cover plate 1 and the second insulating plate 5 in the cross-sectional direction of the pole 4. The cover plate 1 is provided with a liquid injection hole 12, and after the top cover assembly and the housing are connected, the electrolyte is injected into the housing through the liquid injection hole 12. The cover plate 1 is provided with an explosion-proof hole, the second insulating plate 5 is correspondingly provided with a hole, and an explosion-proof valve 8 is mounted on the explosion-proof hole. When the internal pressure is too high, the explosion-proof valve 8 is opened, and the gas is discharged through the second insulating plate 5 and the explosion-proof hole to realize pressure relief. The explosion-proof valve 8 and the cover plate 1 are fixed by welding, and then the protective film 7 is attached to the upper side of the explosion-proof valve 8. The explosion-proof valve 8 has a conventional structure, of which the details are not described.

When the top cover assembly is assembled, the pole 4 passes through the sealing ring 6, the second insulating plate 5, the cover plate 1, the first insulating plate 3, and the pressing plate 2 in sequence to press the pressing plate 2 axially. The pressing plate 2 and the pole 4 are fixedly connect by laser welding, and the second insulating plate 5 and the cover plate 1 are fixed by ultrasonic hot melting.

### Embodiment 2

In the related arts, the top cover assembly is generally manufactured by using a process such as injection molding and riveting of the pole. However, the structure and manufacturing process of the top cover assembly are too complicated, which is not conducive to the battery manufacturing efficiency and cost, and is gradually eliminated. Currently, the pole is welded to the pressing plate of the top cover assembly is mainly used to realize structural fixing. When the pole is welded, the expanded gas generated in the heated area of the pole cannot be discharged from the welding seam, and cavity is formed in the interior, thereby causing welding failure and affecting the battery quality.

According to the top cover assembly of the present application, a s shown in FIG. 1, FIG. 6, and FIG. 8, the top cover assembly includes a cover plate 1, a pressing plate 2, a first insulating plate 3, and a pole 4. The first insulating plate 3 is sandwiched between the pressing plate 2 and the cover plate 1, the cover plate 1 is provided with a first through-hole 10, the pressing plate 2 is provided with a through-hole (for example, a variable-section through-hole 23), and the first insulating plate 3 is provided with a second through-hole 31. The pole 4 sequentially passes through the first through-hole 10, the second through-hole 31, and the through-hole in the pressing plate 2, and the pole 4 and the pressing plate 2 are welded. A gas passage M1 is defined between the first insulating plate 3 and the pressing plate 2, and the through-hole in the pressing plate 2 communicates with the outside through the gas passage M1.

During assembly, the pole 4 is sequentially passed through the first through-hole 10, the second through-hole 31, and the through-hole in the pressing plate 2, and then the pole 4 is welded to the pressing plate 2. As such, the pressing plate 2 and the pole 4 is fixed, thereby achieving axial connection of the top cover assembly. When the pole 4 is welded, the expanded gas generated in the heated area of the pole 4 can be discharged in time through the gas passage M1, so that the formation of cavity in the welding seam is avoided, thereby improving the welding yield and the battery quality.

It should be noted that, for the top cover assembly provided in Embodiment 2, it may be adapted to include any of the embodiments or arrangements of Embodiment 1 related to the top cover assembly, and details are not described herein.

The above-described embodiments of the present application are merely illustrative of the examples provided herein, and are not intended to limit the implements of the present application. Other changes or variations may be made to those of ordinary skill in the art based on the foregoing description. All embodiments need not be, and cannot be, exhaustive. Any modifications, equivalents, and improvements that fall within the spirit and principles of the present application are intended to be included within the scope of the claims.

## Claims

1. A top cover assembly, **characterized by** comprising a cover plate (1), a pressing plate (2) and a pole (4); wherein the cover plate (1) is provided with a first through-hole (10); the pressing plate (2) comprises a first end surface (21) and a second end surface (22) oppositely arranged, and a variable-section through-hole (23); the pole (4) sequentially passes through the first through-hole (10) and the variable-section through-hole (23), and the first end surface (21) faces the cover plate (1);
wherein an opening area of an end of the variable-section through-hole (23) toward the first end surface (21) is a1, an opening area of another end of the variable-section through-hole (23) toward the second end surface (22) is a2, and a cross-sectional area of the pole (4) is A, wherein a1, a2 and A satisfy with: a2≤A<a1.

2. The top cover assembly of claim 1, wherein the pole (4) has a diameter D, an aperture at an end of the variable-section through-hole (23) toward the first end surface (21) is d1, and an aperture at another end of the variable-section through-hole (23) toward the second end surface (22) is d2, wherein D, d1, and d2 satisfy with: d2≤D<d1.

3. The top cover assembly of claim 2, wherein D and d2 satisfy with: D1-d2=B, and a value of B ranges from 0.1mm to 0.3mm; and/or
wherein D and d2 satisfy with: D-d2=C, and a value of C ranges from 0 to 0.05mm.

4. The top cover assembly of any one of claims 1 to 3, further comprising a first insulating plate (3) sandwiched between the pressing plate (2) and the cover plate (1), wherein the first end surface (21) faces the first insulating plate (3), the first insulating plate (3) is provided with a second through-hole (31), and the pole (4) passes in sequence through the first through-hole (10), the second through-hole (31) and the variable-section through-hole (23); wherein a gas passage (M1) is defended between the first insulating plate (3) and the pressing plate (2), and the variable-section through-hole (23) communicates with outside through the gas passage (M1).

5. The top cover assembly of claim 4, wherein a side surface of the first insulating plate (3) toward the pressing plate (2) is provided with a ventilation groove (32), and the ventilation groove (32) and the pressing plate (2) together define the gas passage (M1); and/or
wherein the first end surface (21) of the pressing plate (2) is provided with an exhaust groove, the exhaust groove and the first insulating plate (3) together define the gas passage (M1).

6. The top cover assembly of claim 5, wherein the first insulating plate (3) and the pressing plate (2) are in shape of flat plate, the ventilation groove (32) is provided on a side surface of the first insulating plate (3) toward the pressing plate (2), and/or the exhaust groove is provided in the first end surface (21) of the pressing plate (2).

7. The top cover assembly of claim 4, wherein the pressing plate (2) and the pole (4) are at least partially in clearance fit to define an accommodating cavity (N), an end of the gas passage (M1) communicates with the accommodating cavity (N), and another end of the gas passage (M1) communicates with the outside.

8. The top cover assembly of claim 7, wherein the first insulating plate (3) is provided with a mounting groove (33), a bottom wall of the mounting groove (33) carries the first end surface (21), the second through-hole (31) is defined in the bottom wall of the mounting groove (33), and a ventilation groove (32) communicating with the second through-hole (31) is defined in the bottom wall of the mounting groove (33), the first end surface (21) and the ventilation groove (32) together define the gas passage (M1), a gap between a side wall of the mounting groove (33) and a side surface of the pressing plate (2) together define a discharge passage (M2), the gas passage (M1) and the discharge passage (M2) communicate to define an exhaust passage (M), the gas passage (M1) communicates with the accommodating cavity (N), and the discharge passage (M2) communicates with the outside.

9. The top cover assembly of claim 8, wherein the pressing plate (2) has a cross-sectional area less than an opening area of the mounting groove (33) to define an annular gap between the pressing plate (2) and the side wall of the mounting groove (33).

10. The top cover assembly of claim 8, wherein the side surface of the pressing plate (2) and/or the side wall of the mounting groove (33) is provided with a recess groove to define the discharge passage (M2) between the side surface of the pressing plate (2) and the side wall of the mounting groove (33), wherein the recess groove communicates with the gas passage (M1).

11. The top cover assembly of claim 8, wherein the ventilation groove (32) comprises an annular portion (321) communicating with the second through-hole (31) and a radial portion (322), an end of the radial portion (322) communicates with the annular portion (321) and another end of the radial portion (322) extends to the side wall of the mounting groove (33); and/or, a depth of the ventilation groove (32) ranges from 0.1mm to 0.2mm.

12. The top cover assembly of claim 11, wherein a plurality of the radial portions (322) is provided, and the plurality of the radial portions (322) is uniformly arranged along an outer periphery of the annular portion (321).

13. The top cover assembly of any one of claims 1 to 12, wherein one of the pressing plate (2) and the first insulating plate (3) is provided with a limiting groove (24), and another of the pressing plate (2) and the first insulating plate (3) is provided with a limiting table (34), wherein the limiting table (34) is mounted to the limiting groove (24) to limit the pressing plate (2) and the first insulating plate (3).

14. The top cover assembly of any one of claims 1 to 13, further comprising a second insulating plate (5), wherein an outer periphery of the pole (4) is provided with a flange (41), the pole (4) passes through the second insulating plate (5), and the second insulating plate (5) is sandwiched between the flange (41) and the cover plate (1).

15. A battery, **characterized by** comprising the top cover assembly of any one of claims 1 to 14.
